# EUROPEAN PATENT SPECIFICATION

(11) **EP 3 088 270 B1**
(45) Date of publication and mention of the grant of the patent: **21.07.2021**
(21) Application number: 15165551.1
(22) Date of filing: 29.04.2015
(51) Int. Cl.: B60W 50/10, B60W 40/08

(54) **SYSTEM, METHOD, AND COMPUTER PROGRAM FOR DETECTING ONE OR MORE ACTIVITIES OF A DRIVER OF A VEHICLE**
SYSTEM, VERFAHREN UND COMPUTERPROGRAMM ZUR DETEKTION EINER ODER MEHREREN AKTIVITÄTEN EINES FAHRZEUGFÜHRERS
SYSTÈME, PROCÉDÉ ET PROGRAMME INFORMATIQUE POUR DÉTECTER UNE OU PLUSIEURS ACTIVITÉS D'UN CONDUCTEUR D'UN VÉHICULE

(43) Date of publication of application: 02.11.2016
(73) Proprietor: Bayerische Motoren Werke Aktiengesellschaft, 80809 München (DE)
(72) Inventor: Bigdelou, Ali, 80933 Munich (DE)

(56) References cited:
- US-A1- 2004 252 027
- US-A1- 2011 125 362
- US-A1- 2014 039 757

## Description

### Field of invention

The present invention relates to the field of detecting a driver's activities while driving a vehicle. In particular, one or more activities of a driver are determined based on sensor data and a multi-layer software and/or hardware architecture.

### Background Art

Due to the ongoing development of new sensors, an increasing number of sensors may be found in vehicles. For example, patent application US 2012/0212353 A1 describes methods for assessing driver behavior including monitoring vehicle systems and driver monitoring systems to accommodate for a driver's slow reaction time, attention lapse and/or alertness. When it is determined that a driver is drowsy, a response may modify the operation of one or more vehicle systems.

US 2004/252027 A1 discloses an apparatus and a method for classifying a driver's activity state use sensor data relating to at least one vehicle operating condition to determine driver activity and classify into one of at least two states. A two state classifier uses inputs related to vehicle monitors, driving conditions, driver activity, vehicle controls, and driver identification to set an output to a status corresponding to "maneuver" and "non-maneuver."

US 2011/125362 A1 discloses an operation support apparatus including a musculoskeletal status information acquisition unit that acquires musculoskeletal status information of the operator by controlling the musculoskeletal status detection unit, an operation prediction unit that predicts whether operation of the operating member is operated by the operator based on the musculoskeletal status information acquired by the musculoskeletal status information acquisition unit, and a mechanism control unit that either executes a preprocessing operation of actual operation of the activating mechanism prior to operation of the operating member, or initiates the actual operation, in a case where operation of the operating member has been predicted to be operated by the operation prediction unit.

Accordingly, there may be a need for an efficiently improved system for determining one or more activities of a driver of a vehicle.

### Summary of the Invention

This need may be met by the subject matter according to the independent claims. Advantageous embodiments of the present invention are described by the dependent claims. According to a first aspect of the invention, there is provided a method for detecting one or more combined activities of a driver of a vehicle. The method comprises that one or more activities of a body part of a driver are received by a first activity fusion module of a first layer from each activity recognition module of a plurality of activity recognition modules of the first layer using a common data format. One or more combined activities are determined from the one or more received activities by a first activity fusion module of the first layer. For example, the one or more received activities may be combined according to an activity identifier when the same activity is detected by different activity recognition modules, the start time or the end time of the activities, the type of the detected behavior, the type of the actor performing the one or more activities, and/or based on a description of the activities. The method further comprises that the one or more combined activities are sent from the first activity fusion module of the first layer to a second activity fusion module of a second layer using the same common data format. Further, the one or more combined activities are received by the second activity fusion module of the second layer from the activity fusion module of the first layer using the common data format. Furthermore, one or more activities of a control of a vehicle are received by the second activity fusion module of the second layer from each activity recognition module of a plurality of activity recognition modules of the second layer using the common data format. Moreover, one or more combined activities of the one or more received activities of each of the activity recognition modules of the second layer and the one or more received combined activities of the first activity fusion module of the first layer are determined by the second activity fusion module of the second layer.

By combining the activities using a first and a second activity fusion module, different types of sensors may be efficiently combined to determine more complex activities of a driver of a vehicle. In particular, activities received from activity recognition modules may be combined in a more flexible manner. The common data format may allow to dynamically adding and/or removing activity fusion modules and activity recognition modules so that new activities and/or activities with a higher complexity may be detected, and/or activities may be detected with a higher precision.

According to an embodiment of the invention, the first layer may be an upper layer of a hierarchal structure of layers and the second layer may be a lower layer of the hierarchical structure of layers. This may provide the advantage that the first layer may efficiently communicate any determined activities to any lower layer along the hierarchy of layer.

According to a further embodiment of the invention, the method may further comprise that the one or more activities of a particular body part of the driver may be detected by an activity recognition module of the plurality of activity recognition modules of the first layer. The detecting may comprise receiving sensor data of one or more sensors in a sensor specific data format, determining whether the received sensor data equals a pre-defined sensor data specifying one or more activities in the activities database. If the received sensor data equals the pre-defined sensor data of one or more activities, the one or more activities of the particular body part of the driver may be selected. This may provide the advantage that activities may be detected more efficiently, i.e. having short processing times and requiring low storage capacity in the activities database.

According to a further embodiment of the invention, the method may further comprise that the one or more selected activities of the particular body part of the driver may be sent to the first activity fusion module of the first layer using the common data format. By using the common data format, the communication between the activity recognition modules and the activity fusion module of a particular layer may be commonly formulated and the amount of data to the communicated may be reduced. Only data required by the activity fusion module may be communicated. In addition, activity recognition modules may be added and/or removed more efficiently.

According to a further embodiment of the invention, determining the one or more combined activities of the one or more received activities by the first activity fusion module of the first layer may further comprise that an empty list may be generated to store one or more activities as output in the common data format and that, for each activity received from the first activity recognition module, it may be determined whether an activity already exists in the list. If it is determined that an activity already exists in the list, the existing activity may be updated to combine the activities. If it is determined that the activity does not exist in the list, the activity may be added to the list. This may provide the advantage that the data of already existing activities may be enhanced with new data, and that duplicate data of activities may be prevented.

According to a further aspect, there is provided a system for detecting one or more combined activities of a driver of a vehicle. The system comprises a first activity fusion module of a first layer configured to receive one or more activities of a body part of a driver from each activity recognition module of a plurality of activity recognition modules of the first layer using a common data format, and a first activity fusion module of the first layer configured to determine one or more combined activities of the one or more received activities. Further, the first activity fusion module of the first layer is configured to send the one or more combined activities to a second activity fusion module of a second layer using the common data format. Furthermore, the second activity fusion module of the second layer is configured to receive one or more activities of a control of a vehicle from each activity recognition module of a plurality of activity recognition modules of the second layer using the common data format. Moreover, the second activity fusion module of the second layer further configured to receive the one or more combined activities from the activity fusion module of the first layer using the common data format. Finally, the second activity fusion module of the second layer is configured to determine one or more combined activities of the one or more received activities of each of the activity recognition modules of the second layer and the one or more received combined activities of the first activity fusion module of the first layer.

According to an embodiment of the invention, the first layer may be an upper layer of a hierarchal structure of layers and the second layer may be a lower layer of the hierarchical structure of layers. This may provide the advantage that the first layer may efficiently communicate any determined activities to any lower layer along the hierarchy of layer.

According to further embodiment of the invention, the system may further comprise an activity recognition module of the plurality of activity recognition modules of the first layer which may be configured to detect the one or more activities of a particular body part of the driver. The activity recognition module may be further configured to receive sensor data of one or more sensors in a sensor specific data format, to determine whether the received sensor data equals a pre-defined sensor data specifying one or more activities in the activities database, and, if the received sensor data equals the pre-defined sensor data of one or more activities, to select the one or more activities of the particular body part of the driver. This may provide the advantage that activities may be detected efficiently. More specifically, the one or more activities may be detected with short processing times and requiring low storage capacity in the activities database.

According to a further embodiment of the invention, the activity recognition module of the plurality of activity recognition modules of the first layer may be further configured to send the one of more selected activities of the particular body part of the driver to the first activity fusion module of the first layer using the common data format. By using the common data format, the communication between the activity recognition modules and the activity fusion module of a particular layer may be simplified. Only data required by the activity fusion module may be communicated. In addition, activity recognition modules may be added and/or removed more efficiently.

According to a further embodiment of invention, the first activity fusion module of the first layer may be further configured to determine the one or more combined activities of the one or more received activities. In particular, the first activity fusion module of the first layer may be further configured to generate an empty list to store one or more activities as output in the common data format, to determine, for each activity received from the first activity recognition module, whether an activity already exists in the list. If it is determined that an activity already exists in the list, the first activity fusion module of the first layer may be further configured to update the existing activity to combine the activities. If it is determined that the activity does not exist in the list, the first activity fusion module of the first layer may be configured to add the activity to the list.

According to a further aspect of the invention, a computer program for detecting one or more combined activities of a driver of a vehicle, the computer program, when being executed by a data processor, is adapted for controlling and/or for carrying out the method as described above.

As used herein, reference to a computer program is intended to be equivalent to a reference to a program element and/or to a computer readable medium containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to method type claims whereas other embodiments have been described with reference to apparatus type claims.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

**Figure 1** shows an exemplary architecture of a driver activity and workload recognition system.
**Figure 2** shows an exemplary data structure for recognizing an activity.
**Figure 3** shows an exemplary workflow of an activity fusion module.
**Figure 4** shows an exemplary set of sensors in a cockpit of a vehicle for recognizing one or more activities of a driver.
**Figure 5** shows an exemplary process of detecting a complex activity using several activity fusion modules.

### Detailed Description

This application proposes a more flexible and more efficient system comprising a variable number of sensors and one or more electronic control units (ECUs) to monitor and recognize different actions of a driver of a vehicle. The system allows to combine all available information in a hierarchical structure to build an evolved picture of one or more activities of the driver and potentially other passengers. In particular, the system comprises a modular and flexible hardware and software architecture, a data format for communication between different parts of the system, and a data format for storing activities in local databases.

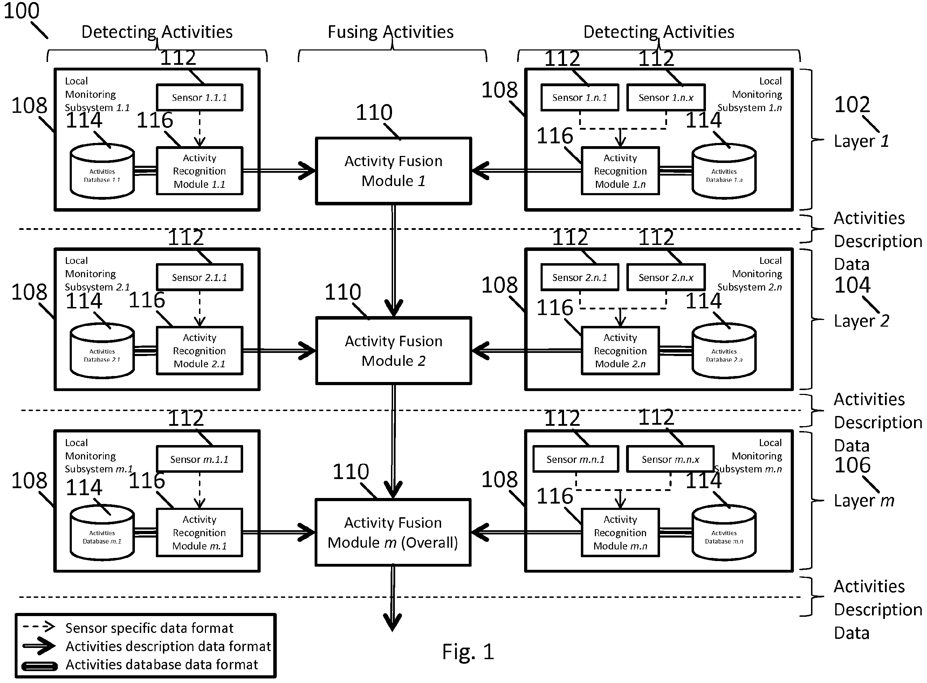

**Figure** 1 shows an exemplary architecture of a driver activity and workload recognition system 100. The driver activity and workload recognition system 100 may comprise one or more layers, e.g. layer 1 102, layer 2 104, and/or layer m 106. Each layer may comprise one or more local monitoring subsystems 108. The one or more local monitoring subsystem may be grouped in a particular layer based on the specialization of the one or more local monitoring subsystems. For example, one or more local monitoring subsystems which focus on the monitoring of different parts of the body of a driver may be grouped into a first layer of the driver activity and workload recognition system 100. One or more local monitoring subsystems which focus on the monitoring of different parts of the body of a co-driver may be grouped into a second layer of the driver activity and workload recognition system 100. And, one or more local monitoring subsystems which focus on the monitoring of driving elements and/or human machine interaction controls may be grouped into a third layer of the driver activity and workload recognition system 100. By grouping the one or more local monitoring subsystem into layers, a hierarchy of layers may be defined. The hierarchy of layers may provide the possibility to recognize more complex activities and extend the system after exposure to users. Further, limited available resources of the one or more local monitoring subsystems may be used more efficiently. Furthermore, modifications of the driver activity and workload recognition system 100 may be performed more easily and more flexibly.

In addition to the one or more local monitoring subsystems 108, each layer comprises at least one activity fusion module 110. Preferably, each layer comprises a single activity fusion module 110. The at least one activity fusion module 110 of a particular layer may receive one or more activities detected by the one or more local monitoring subsystems 108 of the particular layer. Further, the at least one activity fusion module 110 may receive one or more activities from at least one activity fusion module 110 of one or more upper layers. The at least one activity fusion module 110 may use the received activities to combine or to fuse one or more activities in order to detect more complex activities. These activities may be sent from the activity fusion module 110 of a current layer to an activity fusion module 110 of a lower layer in the hierarchical layer structure. For combining or fusing one or more activities, a mapping table may be used. The mapping table may store a predefined combination of one or more activities. A lookup of the mapping table may be performed to find a fused or combined representation of an activity based on one or more activities detected by the one or more local monitoring subsystems 108. Additionally and/or alternatively, machine learning approaches may be used to perform a combination of one or more activities. For example, a machine learning approach based on Principal Component Analysis PCA and/or decision trees may be used to implement a combining or fusing of one or more activities.

Further, a local monitoring subsystem 108 may comprise one or more sensors 112, an activities database 114, and/or an activity recognition module 116. For example, the one or more sensors may comprise a hand gesture and skeleton tracking camera system, an eye gaze and head pose tracking camera system, one or more sensors of driving elements (e.g. steering wheel, gas pedal, brake pedal, etc.), and/or user interaction elements (e.g. human machine interface HMI controls, radio controls, ventilation controls, etc.). The activities database 114 may comprise one or more activities of a driver. Exemplary driver activities may comprise talking with mobile phone, drinking, eating, talking with other passengers, looking for a parking lot, parking, taking over, sleeping, smoking, grooming, making a u-turn, exiting a highway, entering destination address in the navigation system, etc.

In particular, the activity recognition module 116 may communicate with the one or more sensors 112 using a sensor specific data format. For a communication between the activities database 114 and the activity recognition module, an activities database format may be used.

Further, each activity recognition module 116 is connected to an activity database 114 of the corresponding local monitoring subsystem 108. The activity database 114 may comprise data for each activity. In particular, the activity database defines or specifies, for each activity, the sensor data which is required for detecting a particular activity. If the received sensor data fulfils the sensor data specified in the activities database, the activity recognition module 116 may detect or recognize one or more activities. The one or more detected activities may be sent to the activity fusion module 110 using the activities description format. The one or more detected activities of all activity recognition modules of a particular layer may be combined by the activity fusion module to determine an activity of a particular layer. The one or more combined activities of the activity fusion module may be communicated to the activity fusion module of the lower layer in the hierarchical layer structure.

At the lower layer, the one or more combined activities may be updated and/or combined with the one or more detected activities of the one or more activity recognition module of this layer. Thereby, the data of an existing activity may be updated and/or new activities may be detected. Thus, a more evolved picture of one or more activities of a driver of a vehicle may be automatically created.

Since the activity information is stored in local databases, the amount of data to be searched for determining an activity in a local monitoring subsystem is relatively small. Accordingly, the processing times may be short and the necessary storage capacity may be small so that the detecting of the one or more activities may be performed without additional hardware, e.g. on already existing ECUs. In addition, a local monitoring subsystem 108 may be dynamically added and removed from the system. When adding a local monitoring subsystem 108, only the data format of the activity fusion module has to be ensured.

The data format for communication between the one or more activity recognition module and the activity fusion module of a particular layer and between the activity fusion modules of different layer may be the same as depicted in Figure 1. The use of a common data structure may simplify the communication with the activity fusion modules and may enable the communication of only the necessary information between the activity fusion modules of different layers. In particular, data related to a particular activity may be communicated only once to a lower layer even if a particular activity may be detected more than once by different local monitoring systems and/or one or more activity fusion modules of higher layers. Accordingly, the amount of data is efficiently reduced by a particular activity fusion module. Only the necessary and relevant data may be communicated to an activity fusion module of a lower layer using the common data format. Thus, the overhead for communicating the data of one or more activities may be reduced by using the common data format.

In particular, the following data of an activity may be communicated from the activity recognition modules 116 to the activity fusion modules 110 and between the activity fusion modules 110:
- an activity identifier, e.g. the activity identifier may be encoded using a number, a bit sequence or any other suitable identifier,
- an actor of the activity, e.g. a driver, a co-driver, and/or a one or more backseat passengers, and
- a start time and an end time of the activity, when available.

In addition, a motorical factor, a cognitive factor and/or a visual distraction factor may be included in the data of an activity. The motorical, congnitive and/or visual distraction factors may be used to determine how strong an activity distracts a driving ability of the driver.

The motorical factor may represent a motorical distraction of a driver. In particular, the motorical distraction may indicate a physical capacity of a driver to completely and/or adequately perform a driving activity. For example, when a driver is holding a coffee cup in one of his hands while driving, the driver might not completely and adequately perform the driving activity. The motorical factor may be predefined for a particular activity. The cognitive factor may represent a cognitive distraction of a driver. The cognitive distraction may indicate that the driver is mentally busy and might not have enough attention to the road. For example, if the driver is discussing with a further passenger of the vehicle, the driver might be mentally busy and might not have enough attention to the road. The cognitive factor is preferably predefined for a particular activity. The visual factor may represent a visual distraction of a driver. The visual distraction may indicate that a driver is looking at something not related to driving. For example, the driver may look at a smartphone while typing a message on the smartphone. The visual distraction factor may be predefined for a particular activity.

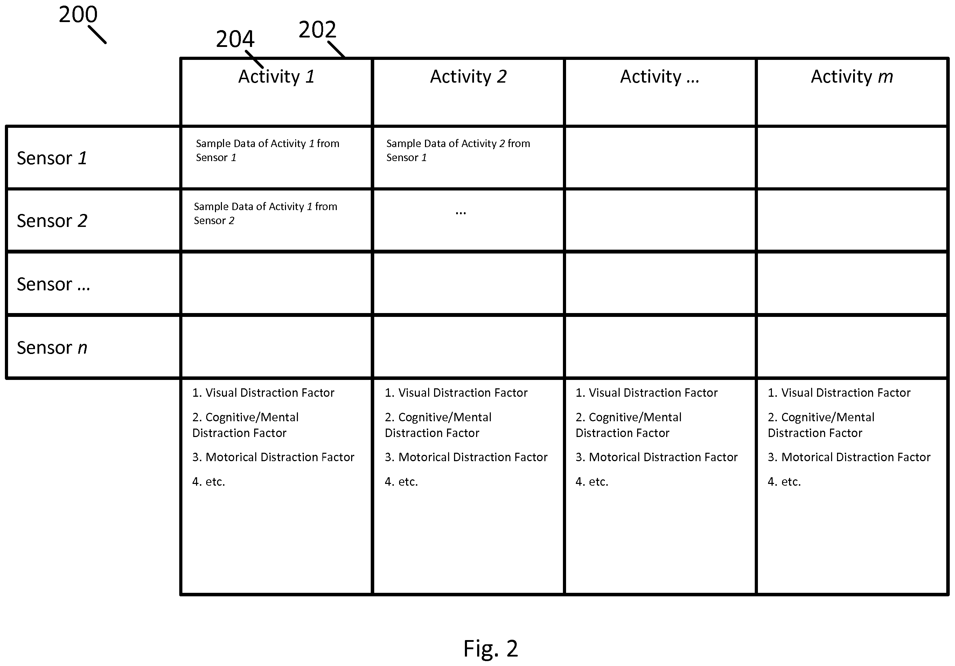

**Figure 2** shows an exemplary data structure 200 for recognizing an activity. In particular, Figure 2 shows an activities database format which may be used by the one or more activity recognition modules 116 to detect or recognize one or more activities. Each activity stored in the activities database format may comprise sample data from one or more sensors, e.g. the one or more sensors of a particular local monitoring subsystem 108. The sample data of each sensor for a particular activity may define the activity. In other words, if the received sensor data equals the sample data from one or more sensors as defined in the activities database 114, the activity recognition module 116 may recognize or detect an activity. For example, if the data received from the one or more sensors equals with the sample data of the first column 202, the Activity 1 204 may be detected. If the received sensor data only partially equals the sample data from the one or more sensors in the activities database 114, a pattern matching approach might be used to determine the level of similarity between the received sensor data and the sample data. Depending on the determined level of similarity, the activity recognition module 116 may recognize or detect an activity.

Further, the activities database format may comprise additional information for each activity. In particular, the activities database format may define, for each activity stored in the activities database, a visual distraction factor, a cognitive/mental distraction factor, and/or a motorical distraction factor. As described above, the distraction factors may be predefined for each activity stored in the activities database.

By using the activities database format, the activities database may provide a list comprising all possible activities of a local monitoring subsystem and every activity may be defined by a list of sampled data from one or more sensors of the local monitoring subsystem. Accordingly, the activity recognition module may compare the received sensor information with the list of sampled sensor data for each activity using any known signal processing and/or machine learning approaches to detect an activity observed by the one or more sensors of the local monitoring subsystem.

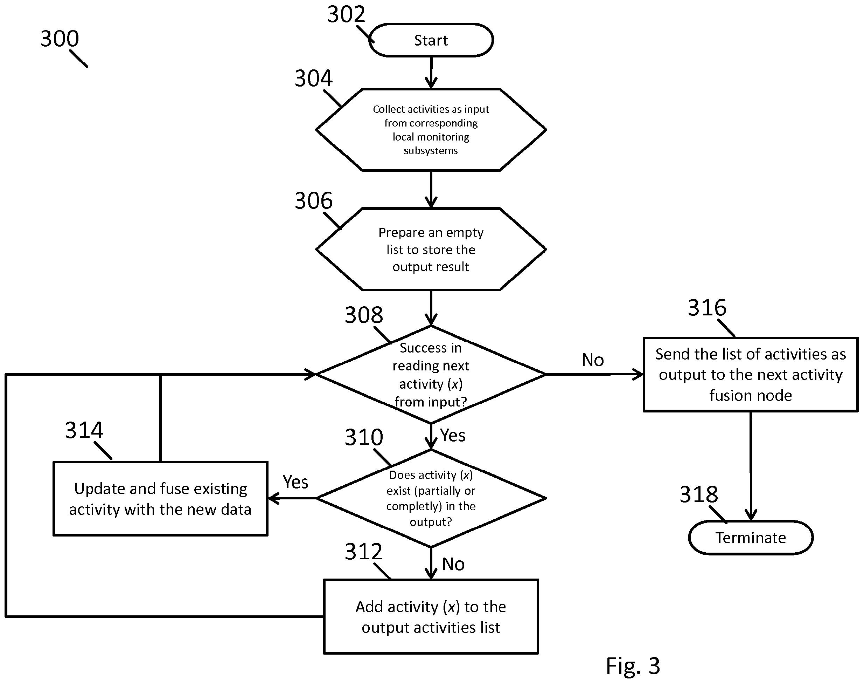

**Figure 3** shows an exemplary workflow 300 of an activity fusion module 110 of a particular layer, e.g. layer 102. After start 302 of the activity fusion module of the particular layer, the activity fusion module 110 collects 304 activities as input from one or more local monitoring subsystems 108 of the particular layer, e.g. by sending a request message to the one or more activity recognition modules 116 of the corresponding local monitoring subsystems 108. Alternatively, after start 302 of the activity fusion module 110, the activity fusion module 110 may wait to receive activities from the one or more activity recognition modules 116 of the corresponding local monitoring subsystems 108 of the particular layer. The activity fusion module may be started at predefined time periods. The activity fusion module may be started using a push or pull design pattern. In addition, the activity fusion module 110 may receive one or more activities from another activity fusion module of an upper layer as input. The activity fusion module 110 may generate or prepare 306 an empty data structure, e.g. an empty list, to store the activities in the data structure as output.

Next, the activity fusion module may read 308 an activity from the received input. As described above, the input may be received from the one or more activity recognition modules 116 of the particular layer and/or another activity fusion module 110 of an upper layer. For each activity in the input, the activity fusion module may determine 310 whether a particular activity partially or completely exists in the output. If the activity fusion module determines that a particular activity does not exist in the output, the activity fusion module may add 312 the particular activity to the output, e.g. an activity element may be added to the output data structure. If the activity fusion module determines that the particular activity already exists in the output, the activity fusion module may update and fuse 314 the existing activity in the output with the data of the particular activity. For example, if the data of the existing activity specifies that the activity has ended at time t₁ and the newly received data of the particular activity specifies that the activity continued until time t₂ where t₂>t₁, the data of the existing activity is updated by the newly received data. In addition, one or more distraction factors, e.g. the motorical factor, the cognitive factor and/or the visual distraction factor, may also be updated. For example, an existing value of a distraction factor may be updated by a newly received value of a distraction factor each time a new value of a distraction factor is received.

After updating and fusing 314 the existing activity in the output with the new data of the particular activity, the activity fusion model 110 may determine 308 whether a next activity exists in the input and, if the next activity exists, may continue with the process as step 310. If the activity fusion module determines that no further activity exists in the input, i.e. all activity from the input are processed, the output, i.e. the data structure comprising the data of the activities, may be sent 316 to a further activity fusion module of a lower layer. After the output is sent to the next activity fusion module, the activity fusion module may terminate 318. Alternatively, the activity fusion module may continue the process at step 304. The last activity fusion module may send the data of the fused or combined activity to a data network of a vehicle, in particular a car. Any device of the data network of the vehicle may read and/or process the data of the fused activity. For example, a device of the data network may determine a fused activity based on a type of the activity. The type of the activity may be encoded by a unique number.

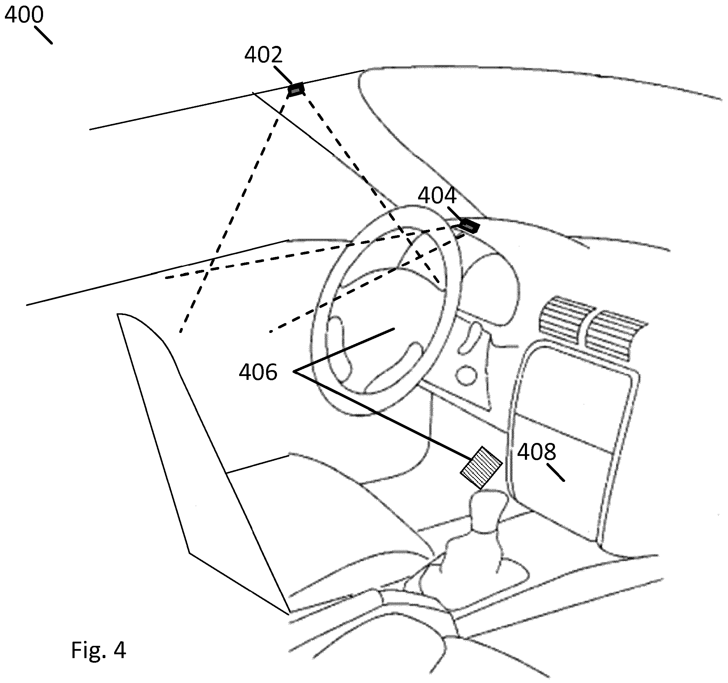

**Figure 4** shows an exemplary set of sensors in a cockpit 400 of a vehicle for recognizing one or more activities of a driver. A hand movement and skeleton tracking sensor 402 may monitor the hand movement of the driver and further passengers of the vehicle. The hand movement and skeleton tracking sensor may be located in the roof of a vehicle. Further, an eye movement sensor 404 may incorporated into the cockpit of the vehicle to track the gaze direction of the driver of the vehicle. Furthermore, sensors may be incorporated into the driving elements 406 of the vehicle. For example, a sensor in the steering wheel may detect an angle of the steering wheel and/or how many hands are touching the steering wheel of the vehicle, e.g. no hand, 1 or two hands. In addition, one or more sensors incorporated in the pedals of a car may be able to detect movement of each of the feet of the driver. Moreover, one or more Human Machine Interface (HMI) control elements 408, e.g. buttons, touch interfaces, etc, may monitor interactions between the driver or any other passenger and the built-in system of the cockpit of the vehicle.

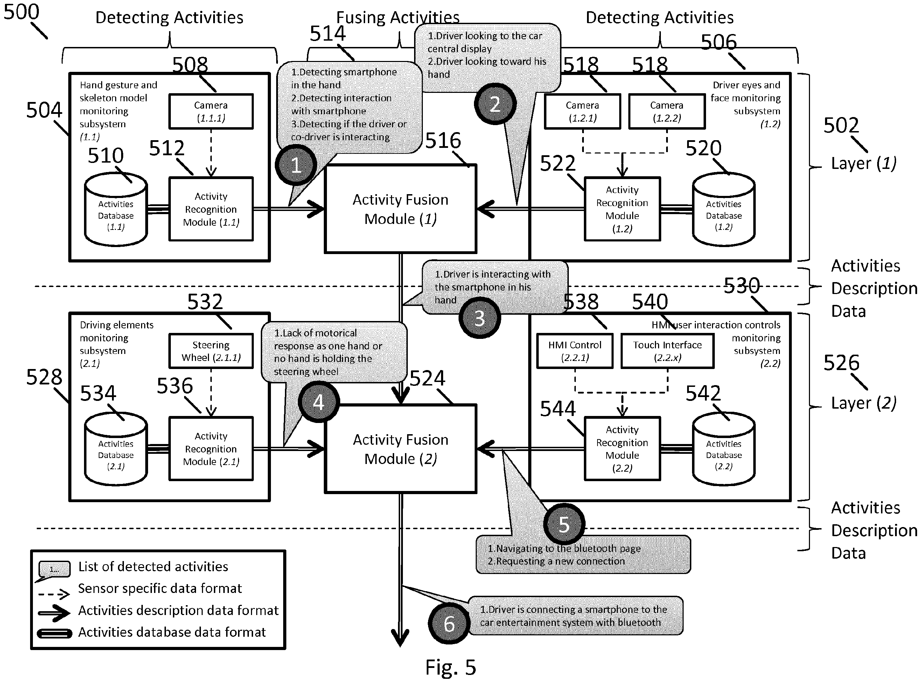

Using the set of sensors as described in Figure 4, **Figure 5** shows an exemplary process of detecting a complex activity using the driver activity and workload recognition system 500 comprising several activity fusion modules. In particular, a first layer 502 of the driver activity and workload recognition system 500 may comprise monitoring subsystems related to parts of a body of a driver. The first layer may further comprise a hand gesture and skeleton model monitoring subsystem 504 and a driver eyes and face monitoring subsystem 506.

The hand gesture and skeleton model monitoring subsystem 504 may comprise a single camera 508 and an activities database 510 storing possible activities which may be detected by the single camera sensor 508. Further, the hand gesture and skeleton model monitoring subsystem 504 may comprise an activity recognition module which receives data from the camera 508 and may detect possible activities based on the data from the camera and using the activities database. In particular, the hand gesture and skeleton model monitoring system 504 may monitor the movement of the hands by e.g. the camera 508.

As depicted in Figure 5, the activity recognition module 512 may detect two activities 514:
1) detecting smartphone in the hand, and
2) detecting interaction with the smartphone.
These two activities may be sent to an activity fusion module 516 of the first layer.

The first layer 502 may also comprise the driver eyes and face monitoring subsystem 506. The driver eyes and face monitoring subsystem comprises two cameras 518, an activities database 520 for storing one or more possible activities related to the driver's eyes and face monitoring subsystem 506, and an activity recognition module 522.

As depicted in Figure 5, the activitiy recognition module 522 may detect two activities:
1) the driver is looking to the car's central display, and
2) the driver is looking towards his hand.
These two activities may be sent to the activity fusion module 516 of the first layer.

The activity fusion module 516 may combine the received activities from the hand gesture and skeleton model monitoring subsystem 504 and the driver eyes and face monitoring subsystem 506 following the process as described in Figure 3 above. For example, the activity fusion module 516 may conclude that the driver is interacting with the smartphone in his hand.

Next, the activity fusion module 516 may send the detected activities to the activity fusion module 524 of the lower layer 526. The lower layer 526 may comprise one or more monitoring subsystems related to elements and controls of a vehicle. In particular, the lower layer 526 may comprise a driving elements monitoring subsystem 528 and a HMI user interaction controls monitoring subsystem 530. The driving elements monitoring subsystem 528 may comprise a sensor incorporated into a steering wheel 532, an activities database 534 comprising one or more activities related to the steering wheel sensor, and an activity recognition module 536 which may detect activities of the steering wheel based on the sensor data of the steering wheel and the activities database. In the example of Figure 5, the activity recognition module 536 may detect a lack of motorical response as one hand or no hand is holding the steering wheel. The detected activity may be sent from the activity recognition module 536 to the activity fusion module 524 of the lower layer 526.
Further, the HMI user interface controls monitoring system 530 of the lower layer 526 may comprise a HMI control 538 and a touch interface 540 as sensors, an activities database 542 comprising one or more activities related to the HMI control 538 and the touch interface 540, and an activity recognition module 544. As exemplary shown in Figure 5, the activity recognition module 544 may detect two activities:
1) navigating to a Bluetooth page, and
2) requesting a new connection.
These activities may be sent using the activities description format as defined above from the activity recognition module 544 to the activity fusion module 524 of the lower layer 526.

When receiving the detected activities of the one or more activity recognition modules 528, 530 of the lower layer 526 and the activity of the activity fusion module 516 of the first layer 502, the activity fusion module 524 may perform the process as described above with reference to Figure 3. In particular, the activity fusion module may determine from the one or more received activities the activity *"driver is connecting a smart phone to the car entertainment system with Bluetooth and is holding the steering wheel only with one hand".*

The activity determined by the activity fusion model 524 may be sent to a car system, e.g. a central information display and/or a driver assistant system/subsystem, so that the car system may react to the received activity. For example, the car system may react to the received activity of the driver by automatically displaying a guidance dialog which may help the driver connecting his smartphone to the car system, e.g. an entertainment system. Alternatively and/or additionally, a driver assistance system may adapt to the received activity when the motorical distraction factor, the cognitive distraction factor, and/or the visual distraction factor of this activity may above a certain threshold, respectively. For example, the driver assistant system may automatically decrease the speed and/or increase braking intensity.

In response to receiving the detected activity, the car system may react to this situation by e.g. automatically popping up one or more guidance dialogs helping to connect the smart phone to the entertainment system.

Advantageously, the modular architecture may enable to add and/or to remove new activity detecting units easily by only ensuring the correct data format for communication between these units and the activity fusion modules. In addition, the processing times for detection the activities at a local monitoring subsystem may be short, since every local monitoring subsystem may have its own local database. By dividing the activity recognition to several ECUs, activity recognition methods may be used which achieve higher recognition rates and/or recognition of activities at a higher quality. In addition, the activities description format may enable simple and fast communication with the activity fusion modules. Only the necessary data of the activities is communicated. Moreover, the activity fusion modules may enable an efficient combination of different sensors at different layers so that a more precise identification of different activities of a driver and other passenger of a vehicle may be detected.
It should be noted that the term "comprising" does not exclude other elements or steps and the use of articles "a" or "an" does not exclude a plurality. It should also be noted that reference signs in the claims should not be construed as limiting the scope of the claims.

### List of reference signs:

- 100: driver activity and workload recognition system
- 102: layer 1
- 104: layer 2
- 106: layer m
- 108: local monitoring subsystem
- 110: activity fusion module
- 112: sensor
- 114: activity database
- 116: activity recognition module
- 200: data structure for recognizing an activity
- 202: first column of the data structure
- 204: activity 1
- 300: exemplary workflow
- 302: start
- 304: collect activities
- 306: prepare an empty data structure
- 308: read an activity
- 310: determine whether an activity exists in the output
- 312: add an activity to the output
- 314: update and fuse activities
- 316: send the output to next activity fusion module
- 318: terminate process
- 400: exemplary set of sensors of a cockpit
- 402: hand movement and skeleton tracking sensor
- 404: eye movement sensor
- 406: driving elements of a vehicle
- 408: Human Machine Interface control elements
- 500: exemplary driver activity and workload recognition system
- 502: first layer
- 504: hand movement and skeleton monitoring subsystem
- 506: driver eyes and face monitoring subsystem
- 508: camera
- 510: activities database
- 512: activity recognition module
- 514: three activities
- 516: activity fusion module of a first layer
- 518: two cameras
- 520: activities database
- 522: activity recognition module
- 524: activity fusion module of a lower layer
- 526: lower layer
- 528: driving elements monitoring subsystem
- 530: HMI user interaction controls monitoring subsystem
- 532: steering wheel
- 534: activities database
- 536: activity recognition module
- 538: HMI control
- 540: touch interface
- 542: activities database
- 544: activity recognition module

## Claims

1. Method for detecting one or more combined activities of a driver of a vehicle, the method comprising:
receiving, by a first activity fusion module (110) of a first layer (102), one or more activities of a body part of a driver from each activity recognition module of a plurality of activity recognition modules (116) of the first layer (102) using a common data format;
determining, by a first activity fusion module (110) of the first layer (102), one or more combined activities from the one or more received activities;
sending, by the first activity fusion module (110) of the first layer (102), the one or more combined activities to a second activity fusion module of a second layer (104) using the common data format;
receiving, by the second activity fusion module of the second layer (104), one or more combined activities of a driver of a vehicle from each activity recognition module of a plurality of activity recognition modules of the second layer (104) using the common data format;
receiving, by the second activity fusion module of the second layer (104), the one or more combined activities from the activity fusion module (110) of the first layer (102) using the common data format; and
determining, by the second activity fusion module of the second layer (104),one or more combined activities of the one or more received activities of each of the activity recognition modules of the second layer (104) and the one or more received combined activities of the first activity fusion module (110) of the first layer (102).

2. Method according to claim 1, wherein the first layer (102) is an upper layer of a hierarchal structure of layers and the second layer (104) is a lower layer of the hierarchical structure of layers.

3. Method according to any one of claims 1 and 2, the method further comprising:
detecting, by an activity recognition module of the plurality of activity recognition modules of the first layer (102), the one or more activities of a particular body part of the driver, wherein detecting comprises:
- receiving sensor data of one or more sensors in a sensor specific data format,
- determining whether the received sensor data equals a pre-defined sensor data specifying one or more activities in the activities database,
- if the received sensor data equals the pre-defined sensor data of one or more activities, selecting the one or more activities of the particular body part of the driver.

4. Method according to claim 3, the method further comprising:
sending the one of more selected activities of the particular body part of the driver to the first activity fusion module (110) of the first layer (102) using the common data format.

5. Method according to any one of the preceding claims, wherein determining, by the first activity fusion module (110) of the first layer (102), the one or more combined activities of the one or more received activities further comprises:
- generating an empty list to store one or more activities as output in the common data format;
- determining, for each activity received from the first activity recognition modules, whether an activity already exists in the list;
- if it is determined that an activity already exists in the list, updating the existing activity to combine the activities; and
- if it is determined that the activity does not exist in the list, adding the activity to the list.

6. System (100) for detecting one or more combined activities of a driver of a vehicle, the system comprising:
a first activity fusion module (110) of a first layer (102) configured to receive one or more activities of a body part of a driver from each activity recognition module of a plurality of activity recognition modules (116) of the first layer (102) using a common data format;
a first activity fusion module (110) of the first layer (102) configured to determine one or more combined activities from the one or more received activities;
the first activity fusion module (110) of the first layer (102) further configured to send the one or more combined activities to a second activity fusion module of a second layer (104) using the common data format;
the second activity fusion module of the second layer (104) further configured to receive one or more combined activities of a driver of a vehicle from each activity recognition module of a plurality of activity recognition modules of the second layer (104) using the common data format;
the second activity fusion module of the second layer (104) further configured to receive the one or more combined activities from the activity fusion module (110) of the first layer (102) using the common data format; and
the second activity fusion module of the second layer (104) further configured to determine one or more combined activities of the one or more received activities of each of the activity recognition modules of the second layer (104) and the one or more received combined activities of the first activity fusion module of the first layer (102).

7. System according to claim 6, wherein the first layer is an upper layer of a hierarchal structure of layers and the second layer is a lower layer of the hierarchical structure of layers.

8. System according to any one of claims 6 to 7, the system further comprising:
an activity recognition module of the plurality of activity recognition modules (116) of the first layer (102) configured to detect the one or more activities of a particular body part of the driver, comprising:
- receive sensor data of one or more sensors in a sensor specific data format,
- determine whether the received sensor data equals a pre-defined sensor data specifying one or more activities in the activities database,
- if the received sensor data equals the pre-defined sensor data of one or more activities, select the one or more activities of the particular body part of the driver.

9. System according to claim 8, wherein the activity recognition module of the plurality of activity recognition modules (116) of the first layer (102) is further configured to send the one of more selected activities of the particular body part of the driver to the first activity fusion module of the first layer using the common data format.

10. System according to any one of claim 6 to 9, wherein the first activity fusion module (110) of the first layer (102) is further configured to determine the one or more combined activities of the one or more received activities, comprising:
- generate an empty list to store one or more activities as output in the common data format;
- determine, for each activity received from the first activity recognition modules, whether an activity already exists in the list;
- if it is determined that an activity already exists in the list, update the existing activity to combine the activities; and
- if it is determined that the activity does not exist in the list, add the activity to the list.

11. Computer program for detecting one or more combined activities of a driver of a vehicle, the computer program, when being executed by a data processor, is adapted for controlling and/or for carrying out the method as set forth in any one of the claims 1 to 5.

## Patentansprüche

1. Verfahren zum Erkennen von einer oder mehreren kombinierten Aktivitäten eines Fahrers eines Fahrzeugs, wobei das Verfahren Folgendes umfasst:
Empfangen, durch ein erstes Aktivitätsfusionsmodul (110) einer ersten Schicht (102), einer oder mehrerer Aktivitäten eines Körperteils eines Fahrers von jedem Aktivitätserkennungsmodul einer Vielzahl von Aktivitätserkennungsmodulen (116) der ersten Schicht (102) unter Verwendung eines gemeinsamen Datenformats;
Bestimmen, durch ein erstes Aktivitätsfusionsmodul (110) der ersten Schicht (102), von einer oder mehreren kombinierten Aktivitäten aus den ein oder mehreren empfangenen Aktivitäten;
Senden, durch das erste Aktivitätsfusionsmodul (110) der ersten Schicht (102), der einen oder mehreren kombinierten Aktivitäten an ein zweites Aktivitätsfusionsmodul einer zweiten Schicht (104) unter Verwendung des gemeinsamen Datenformats;
Empfangen, durch das zweite Aktivitätsfusionsmodul der zweiten Schicht (104), von einer oder mehreren kombinierten Aktivitäten eines Fahrers eines Fahrzeugs von jedem Aktivitätserkennungsmodul einer Vielzahl von Aktivitätserkennungsmodulen der zweiten Schicht (104) unter Verwendung des gemeinsamen Datenformats;
Empfangen, durch das zweite Aktivitätsfusionsmodul der zweiten Schicht (104), der einen oder mehreren kombinierten Aktivitäten vom Aktivitätsfusionsmodul (110) der ersten Schicht (102) unter Verwendung des gemeinsamen Datenformats; und
Bestimmen, durch das zweite Aktivitätsfusionsmodul der zweiten Schicht (104), von einer oder mehreren kombinierten Aktivitäten der einen oder mehreren empfangenen Aktivitäten von jedem der Aktivitätserkennungsmodule der zweiten Schicht (104) und der einen oder mehreren empfangenen kombinierten Aktivitäten des ersten Aktivitätsfusionsmoduls (110) der ersten Schicht (102).

2. Verfahren gemäß Anspruch 1, wobei die erste Schicht (102) eine obere Schicht einer hierarchischen Struktur von Schichten ist und die zweite Schicht (104) eine untere Schicht der hierarchischen Struktur von Schichten ist.

3. Verfahren gemäß einem der Ansprüche 1 und 2, wobei das Verfahren ferner Folgendes umfasst:
Erkennen, durch ein Aktivitätserkennungsmodul der Vielzahl von Aktivitätserkennungsmodulen der ersten Schicht (102), der einen oder mehreren Aktivitäten eines bestimmten Körperteils des Fahrers, wobei das Erkennen Folgendes umfasst:
- Empfangen von Sensordaten eines oder mehrerer Sensoren in einem sensorspezifischen Datenformat,
- Bestimmen, ob die empfangenen Sensordaten mit den vordefinierten Sensordaten übereinstimmen, die eine oder mehrere Aktivitäten in der Aktivitätsdatenbank spezifizieren,
- falls die empfangenen Sensordaten mit den vordefinierten Sensordaten einer oder mehrerer Aktivitäten übereinstimmen, Auswählen der einen oder mehreren Aktivitäten des jeweiligen Körperteils des Fahrers.

4. Verfahren gemäß Anspruch 3, wobei das Verfahren ferner Folgendes umfasst:
Senden der einen oder mehreren ausgewählten Aktivitäten des bestimmten Körperteils des Fahrers an das erste Aktivitätsfusionsmodul (110) der ersten Schicht (102) unter Verwendung des gemeinsamen Datenformats.

5. Verfahren gemäß einem der vorhergehenden Ansprüche, wobei das Bestimmen der einen oder mehreren kombinierten Aktivitäten der einen oder mehreren empfangenen Aktivitäten durch das erste Aktivitätsfusionsmodul (110) der ersten Schicht (102) ferner Folgendes umfasst:
- eine leere Liste erzeugen, um eine oder mehrere Aktivitäten als Ausgabe im gemeinsamen Datenformat zu speichern:
- Bestimmen, für jede von den ersten Aktivitätserkennungsmodulen empfangene Aktivität, ob eine Aktivität bereits in der Liste vorhanden ist;
- falls bestimmt wird, dass eine Aktivität bereits in der Liste vorhanden ist, Aktualisieren der vorhandenen Aktivität, um die Aktivitäten zu kombinieren; und
- falls bestimmt wird, dass die Aktivität nicht in der Liste vorhanden ist, Hinzufügen der Aktivität zur Liste.

6. System (100) zum Erkennen von einer oder mehreren kombinierten Aktivitäten eines Fahrers eines Fahrzeugs, wobei das System Folgendes umfasst:
ein erstes Aktivitätsfusionsmodul (110) einer ersten Schicht (102), das dazu ausgelegt ist, eine oder mehrere Aktivitäten eines Körperteils eines Fahrers von jedem Aktivitätserkennungsmodul einer Vielzahl von Aktivitätserkennungsmodulen (116) der ersten Schicht (102) unter Verwendung eines gemeinsamen Datenformats zu empfangen;
ein erstes Aktivitätsfusionsmodul (110) der ersten Schicht (102), das dazu ausgelegt ist, eine oder mehrere kombinierte Aktivitäten aus den ein oder mehreren empfangenen Aktivitäten zu bestimmen;
wobei das erste Aktivitätsfusionsmodul (110) der ersten Schicht (102) ferner dazu ausgelegt ist, die ein oder mehreren kombinierten Aktivitäten an ein zweites Aktivitätsfusionsmodul einer zweiten Schicht (104) unter Verwendung des gemeinsamen Datenformats zu senden;
das zweite Aktivitätsfusionsmodul der zweiten Schicht (104) ferner dazu ausgelegt ist, eine oder mehrere kombinierte Aktivitäten eines Fahrers eines Fahrzeugs von jedem Aktivitätserkennungsmodul einer Vielzahl von Aktivitätserkennungsmodulen der zweiten Schicht (104) unter Verwendung des gemeinsamen Datenformats zu empfangen;
das zweite Aktivitätsfusionsmodul der zweiten Schicht (104) ferner dazu ausgelegt ist, die ein oder mehreren kombinierten Aktivitäten vom Aktivitätsfusionsmodul (110) der ersten Schicht (102) unter Verwendung des gemeinsamen Datenformats zu empfangen; und
das zweite Aktivitätsfusionsmodul der zweiten Schicht (104) ferner dazu ausgelegt ist, eine oder mehrere kombinierte Aktivitäten der einen oder mehreren empfangenen Aktivitäten von jedem der Aktivitätserkennungsmodule der zweiten Schicht (104) und eine oder mehrere empfangene kombinierte Aktivitäten des ersten Aktivitätsfusionsmoduls der ersten Schicht (102) zu bestimmen.

7. System gemäß Anspruch 6, wobei die erste Schicht eine obere Schicht einer hierarchischen Struktur von Schichten ist und die zweite Schicht eine untere Schicht der hierarchischen Struktur von Schichten ist.

8. System gemäß einem der Ansprüche 6 bis 7, wobei das System ferner Folgendes umfasst:
ein Aktivitätserkennungsmodul der Vielzahl von Aktivitätserkennungsmodulen (116) der ersten Schicht (102), das dazu ausgelegt ist, die eine oder mehreren Aktivitäten eines bestimmten Körperteils des Fahrers zu erkennen, Folgendes umfassend:
- Empfangen von Sensordaten eines oder mehrerer Sensoren in einem sensorspezifischen Datenformat,
- Bestimmen, ob die empfangenen Sensordaten mit den vordefinierten Sensordaten übereinstimmen, die eine oder mehrere Aktivitäten in der Aktivitätsdatenbank spezifizieren,
- falls die empfangenen Sensordaten mit den vordefinierten Sensordaten einer oder mehrerer Aktivitäten übereinstimmen, Auswählen der einen oder mehreren Aktivitäten des jeweiligen Körperteils des Fahrers.

9. System gemäß Anspruch 8, wobei das Aktivitätserkennungsmodul der Vielzahl von Aktivitätserkennungsmodulen (116) der ersten Schicht (102) ferner dazu ausgelegt ist, die eine oder mehreren ausgewählte Aktivitäten des bestimmten Körperteils des Fahrers unter Verwendung des gemeinsamen Datenformats an das erste Aktivitätsfusionsmodul der ersten Schicht zu senden.

10. System gemäß einem der Ansprüche 6 bis 9, wobei das erste Aktivitätsfusionsmodul (110) der ersten Schicht (102) ferner dazu ausgelegt ist, die eine oder mehreren kombinierten Aktivitäten der einen oder mehreren empfangenen Aktivitäten zu bestimmen, Folgendes umfassend:
- Erzeugen einer leeren Liste, um eine oder mehrere Aktivitäten als Ausgabe im gemeinsamen Datenformat zu speichern;
- Bestimmen, für jede von den ersten Aktivitätserkennungsmodulen empfangene Aktivität, ob eine Aktivität bereits in der Liste vorhanden ist;
- falls bestimmt wird, dass eine Aktivität bereits in der Liste vorhanden ist, Aktualisieren der vorhandenen Aktivität, um die Aktivitäten zu kombinieren; und
- falls bestimmt wird, dass die Aktivität nicht in der Liste vorhanden ist, Hinzufügen der Aktivität zur Liste.

11. Computerprogramm zum Erkennen einer oder mehrerer kombinierter Aktivitäten eines Fahrers eines Fahrzeugs, wobei das Computerprogramm, wenn es von einem Datenprozessor ausgeführt wird, zum Steuern und/oder zum Ausführen des Verfahrens nach einem der Ansprüche 1 bis 5 eingerichtet ist.

## Revendications

1. Procédé pour détecter une ou plusieurs activités combinées d'un conducteur d'un véhicule, le procédé comprenant de :
recevoir, par un premier module de fusion d'activités (110) d'une première couche (102), une ou plusieurs activités d'une partie du corps d'un conducteur à partir de chaque module de reconnaissance d'activité d'une pluralité de modules de reconnaissance d'activité (116) de la première couche (102) en utilisant un format de données commun;
déterminer, par un premier module de fusion d'activités (110) de la première couche (102), une ou plusieurs activités combinées à partir de la ou des activités reçues;
envoyer, par le premier module de fusion d'activités (110) de la première couche (102), la ou les activités combinées à un second module de fusion d'activités d'une seconde couche (104) en utilisant le format de données commun ;
recevoir, par le second module de fusion d'activités de la seconde couche (104), une ou plusieurs activités combinées d'un conducteur d'un véhicule à partir de chaque module de reconnaissance d'activité d'une pluralité de modules de reconnaissance d'activité de la seconde couche (104) en utilisant le format de données commun ;
recevoir, par le second module de fusion d'activités de la seconde couche (104), la ou les activités combinées à partir du module de fusion d'activités (110) de la première couche (102) en utilisant le format de données commun ; et
déterminer, par le second module de fusion d'activités de la seconde couche (104), une ou plusieurs activités combinées de la ou des activités reçues de chacun des modules de reconnaissance d'activité de la seconde couche (104) et la ou les activités combinées reçues du premier module de fusion d'activités (110) de la première couche (102).

2. Procédé selon la revendication 1, dans lequel la première couche (102) est une couche supérieure d'une structure de couches hiérarchique et la seconde couche (104) est une couche inférieure de la structure de couches hiérarchique.

3. Procédé selon l'une quelconque des revendications 1 et 2, le procédé comprenant en outre de :
détecter, par un module de reconnaissance d'activité de la pluralité de modules de reconnaissance d'activité de la première couche (102), la ou les activités d'une partie du corps particulière du conducteur, dans lequel la détection comprend de :
- recevoir des données de capteur d'un ou plusieurs capteurs dans un format de données spécifique au capteur,
- déterminer si les données de capteur reçues sont égales à des données de capteur prédéfinies spécifiant une ou plusieurs activités dans la base de données d'activités,
- si les données de capteur reçues sont égales aux données de capteur prédéfinies d'une ou plusieurs activités, sélectionner la ou les activités de la partie du corps particulière du conducteur.

4. Procédé selon la revendication 3, le procédé comprenant en outre de :
envoyer la ou les activités sélectionnées de la partie du corps particulière du conducteur au premier module de fusion d'activités (110) de la première couche (102) en utilisant le format de données commun.

5. Procédé selon l'une quelconque des revendications précédentes, dans lequel la détermination, par le premier module de fusion d'activités (110) de la première couche (102), de la ou des activités combinées de la ou des activités reçues comprend en outre de :
- générer une liste vide pour stocker une ou plusieurs activités en tant que sortie dans le format de données commun;
- déterminer, pour chaque activité reçue à partir des premiers modules de reconnaissance d'activité, si une activité existe déjà dans la liste;
- s'il est déterminé qu'une activité existe déjà dans la liste, mettre à jour l'activité existante pour combiner les activités; et
- s'il est déterminé que l'activité n'existe pas dans la liste, ajouter l'activité à la liste.

6. Système (100) pour détecter une ou plusieurs activités combinées d'un conducteur d'un véhicule, le système comprenant :
un premier module de fusion d'activités (110) d'une première couche (102) configuré pour recevoir une ou plusieurs activités d'une partie du corps d'un conducteur à partir de chaque module de reconnaissance d'activité d'une pluralité de modules de reconnaissance d'activité (116) de la première couche (102) en utilisant un format de données commun;
un premier module de fusion d'activités (110) de la première couche (102) configuré pour déterminer une ou plusieurs activités combinées à partir de la ou des activités reçues;
le premier module de fusion d'activités (110) de la première couche (102) configuré en outre pour envoyer la ou les activités combinées à un second module de fusion d'activités d'une seconde couche (104) en utilisant le format de données commun;
le second module de fusion d'activités de la seconde couche (104) configuré en outre pour recevoir une ou plusieurs activités combinées d'un conducteur d'un véhicule à partir de chaque module de reconnaissance d'activité d'une pluralité de modules de reconnaissance d'activité de la seconde couche (104) en utilisant le format de données commun;
le second module de fusion d'activités de la seconde couche (104) configuré en outre pour recevoir la ou les activités combinées à partir du module de fusion d'activités (110) de la première couche (102) en utilisant le format de données commun; et
le second module de fusion d'activités de la seconde couche (104) configuré en outre pour déterminer une ou plusieurs activités combinées de la ou des activités reçues de chacun des modules de reconnaissance d'activité de la seconde couche (104) et la ou les activités combinées reçues du premier module de fusion d'activités de la première couche (102).

7. Système selon la revendication 6, dans lequel la première couche est une couche supérieure d'une structure hiérarchique de couches et la seconde couche est une couche inférieure de la structure hiérarchique de couches.

8. Système selon l'une quelconque des revendications 6 à 7, le système comprenant en outre :
un module de reconnaissance d'activité de la pluralité de modules de reconnaissance d'activité (116) de la première couche (102) configuré pour détecter la ou les activités d'une partie du corps particulière du conducteur, comprenant de :
- recevoir des données de capteur d'un ou plusieurs capteurs dans un format de données spécifique au capteur,
- déterminer si les données de capteur reçues sont égales à des données de capteur prédéfinies spécifiant une ou plusieurs activités dans la base de données d'activités,
- si les données de capteur reçues sont égales aux données de capteur prédéfinies d'une ou plusieurs activités, sélectionner la ou les activités de la partie du corps particulière du conducteur.

9. Système selon la revendication 8, dans lequel le module de reconnaissance d'activité de la pluralité de modules de reconnaissance d'activité (116) de la première couche (102) est en outre configuré pour envoyer la ou les activités sélectionnées de la partie du corps particulière du conducteur au premier module de fusion d'activités de la première couche en utilisant le format de données commun.

10. Système selon l'une quelconque des revendications 6 à 9, dans lequel le premier module de fusion d'activités (110) de la première couche (102) est en outre configuré pour déterminer la ou les activités combinées de la ou des activités reçues, comprenant de :
- générer une liste vide pour stocker une ou plusieurs activités en tant que sortie dans le format de données commun;
- déterminer, pour chaque activité reçue à partir des premiers modules de reconnaissance d'activité, si une activité existe déjà dans la liste;
- s'il est déterminé qu'une activité existe déjà dans la liste, mettre à jour l'activité existante pour combiner les activités; et
- s'il est déterminé que l'activité n'existe pas dans la liste, ajouter l'activité à la liste.

11. Programme d'ordinateur pour détecter une ou plusieurs activités combinées d'un conducteur d'un véhicule, le programme d'ordinateur, lorsqu'il est exécuté par un processeur de données, est adapté pour commander et/ou pour réaliser le procédé tel que décrit dans l'une quelconque des revendications 1 à 5.
